# EUROPÄISCHE PATENTSCHRIFT

(11) **EP 2 462 798 B1**
(45) Veröffentlichungstag und Bekanntmachung des Hinweises auf die Patenterteilung: **16.01.2013**
(21) Anmeldenummer: 11009642.7
(22) Anmeldetag: 07.12.2011
(51) Int. Cl.: A01K 5/00, A23N 17/00, B01F 7/24

(54) **Mischbehälter für die Aufnahme von Viehfutter**
Mix container for holding cattle feed
Récipient mélangeur d'aliments pour bétail

(30) Priorität: 09.12.2010 DE 202010016420 U
(43) Veröffentlichungstag der Anmeldung: 13.06.2012
(73) Patentinhaber: B. Strautmann & Söhne GmbH & Co. KG, 49196 Bad Laer (DE)
(72) Erfinder: Bevermann, Wilhelm, 49196 Bad Laer (DE)
(74) Vertreter: Hoffmeister, Helmut

(56) Entgegenhaltungen:
- EP-A2- 0 885 559
- DE-A1- 3 236 121
- DE-U1- 20 012 862
- DE-U1-202008 014 820
- DE-U1-202009 004 733

## Beschreibung

Die Erfindung betrifft einen Mischbehälter für die Aufnahme von Viehfutter in der Ausgestaltung nach dem Oberbegriff des Anspruches 1. In verfahrbaren oder stationären Mischanlagen der vorgenannten Art finden im Allgemeinen oben offene Mischbehälter Verwendung. Mit den zugehörigen Fahrgestellen oder stationären Gestellen sind sie im Allgemeinen fest verbunden. Die aus mehreren Bauelementen zusammengeschweißten oder geschraubten, am oberen Rand mit verschweißten Verstärkungen versehenen Mischbehälter sind hohen Belastungen ausgesetzt, da durch zwischen Mischschnecke und Mischbehälter zusammengepresstes Erntegut hoher Druck auf die Innenseiten des Mischbehälters ausgeübt wird. Derartige Mischbehälter sind beispielsweise aus den Druckschriften DE-2020080 14820U und DE-20012862U bekannt.

Die hohen, hieraus entstehenden, Beanspruchungen machen Verstärkungen erforderlich, die insbesondere den Mischbehälter an seinem oberen Rand, zur Verhinderung von Walkbewegungen und Ausbeulungen, stabilisieren. Diese oberen Randverstärkungen bestehen aus zusätzlichen Verstärkungsprofilen, die rundum am oberen Rand verschweißt sind. Die Randverstärkungen sind im Allgemeinen so gestaltet, dass sie am oberen Rand aufsteigendes Mischgut zur Vermeidung von Überlaufverlusten zur Behältermitte abweisen.

Aufgabe der Erfindung ist es deshalb, einen Mischbehälter vorzuschlagen, bei dem zusätzliche Verstärkungsprofile entfallen können.

Diese Aufgabe wird dadurch gelöst, dass am oberen Rand des Mischbehälters eine umlaufende Sicke angebracht ist.

Zur Vermeidung hoher Produktionskosten wird erfindungsgemäß vorgesehen, die zusätzlichen Verstärkungsprofile entfallen zu lassen und durch eine, am oberen Rand des Mischbehälters relativ einfach herzustellende, umlaufende Sicke zu ersetzen. Hierbei werden merkliche Einsparungen an Material- und Fertigungskosten, wie zum Beispiel durch fortfallende Teile und durch nicht mehr notwendige Schweißarbeiten, erzielt.

Die bisherige, zur Vermeidung des Überlaufens von Mischgut nach innen weisende, Anordnung der Verstärkungen kann, ohne zusätzliche Arbeitsgänge und ohne zusätzliche Bauteile als Abweisfläche in die Form der Sicke integriert werden.

In einer vorteilhaften Ausführung ist die Vertiefung der Sicke auf der Innenseite des Mischbehälters angeordnet und weist eine Abweisfläche auf. Die hierdurch bedingte Einschnürung am oberen Behälterrand reduziert die Gefahr des Überlaufens.

Besonders günstig ist es zudem, wenn am oberen Rand des Mischbehälters ein Aufsatz montiert werden kann, der wiederum an seinem oberen Rand mit einer nach innen gerichteten, mit einer Abweisfläche versehenen, umlaufenden Sicke ausgestattet ist. Hierdurch wird es ermöglicht, den Behälter nicht nur mit einem Aufsatz, sondern mit mehreren, aufeinander aufbauenden, Aufsätzen zu versehen. Ein Mischbehälter, der beispielsweise zunächst ein Mischvolumen von 10m³ aufweist, kann so durch einen ersten Aufsatz auf beispielsweise 12m³ und dann durch einen 2. Aufsatz auf beispielsweise 15m³ erweitert werden. Dies ist besonders dann interessant, wenn der Landwirt, der mit dem Mischwagen sein Vieh füttert, seine Bestandsgröße nach und nach erweitert oder wenn eine Gebrauchtmaschine an eine andere Bestandsgröße angepasst werden soll.

In einer vorteilhaften Ausführung der Erfindung sind bei Anordnung von mehreren Mischschnecken die Mantelverlängerungen zwischen Stirn- und Heckteil mit Sicken ausgestattet. Hintergrund ist, dass bei Mischbehältern, die mit mehreren Mischschnecken ausgerüstet sind, der obere Rand des Behälters in der Regel so ausgeführt ist, dass stirn- und heckseitig je eine in der Regel in etwa halbkreisförmig Kontur vorhanden ist. Die beiden Halbkreise sind im mittleren Bereich des Mischbehälters durch gerade Stücke miteinander verbunden. Dadurch, dass auch diese mittleren Bereiche über je eine Sicke verfügen, wird eine einheitliche, den kompletten oberen Behälterrand umlaufende Sicke hergestellt.

In einer weiteren vorteilhaften Ausgestaltung des Mischbehälters sind Mantel und Boden am unteren Rand von Stirn- und Heckteil miteinander verschraubt. Hierdurch wird es möglich, den Mischbehälter zunächst in seinen Einzelteilen herzustellen, dann die Einzelteile als Bausatz zu versenden und schließlich beim Kunden zusammenzubauen. Das ist insbesondere dann von Vorteil, wenn ein Überseeversand erforderlich ist, da die Einzelteile im Gegensatz zur Komplettmaschine die Standard-Containermaße nicht überschreiten und so einen kostengünstigen Container-Versand in der Regel erst ermöglichen.

Besonders günstig ist es, wenn die Schraubverbindung zwischen Mantel und Boden an einer am unteren Rand angebrachten Bördelkante vorgesehen ist, wobei die Bördelkante über einen äußeren Steg mit dem Boden verbunden ist. Dabei wird eine formschlüssige Verbindung realisiert, wobei der innere Mischraum im Bereich der Schraubverbindung ohne zusätzliche Stoßkanten auskommt. Zudem können die Schraubköpfe, welche vorteilhafter Weise im Inneren des Behälters angeordnet sind, als Senkköpfe ausgelegt sein, so dass zwischen der den Behälterboden überstreichenden Mischschnecke und dem Behälterboden kein durch Schraubenköpfe oder einen innen liegenden Steg bedingter Spalt erforderlich ist bzw. bedingt wird.

Alternativ zu einer Bördelkante kann die Schraubverbindung zwischen Mantel und Boden mittels eines den Boden umlaufenden Winkelprofileisens realisiert sein. Auch hierbei entstehen im Behälterinneren keine Stoßkanten und ein zusätzlicher Spalt zwischen Mischschnecke und Boden wird vermieden.

Nachstehend wird die Erfindung an einem Beispiel beschrieben und in der Zeichnung dargestellt.

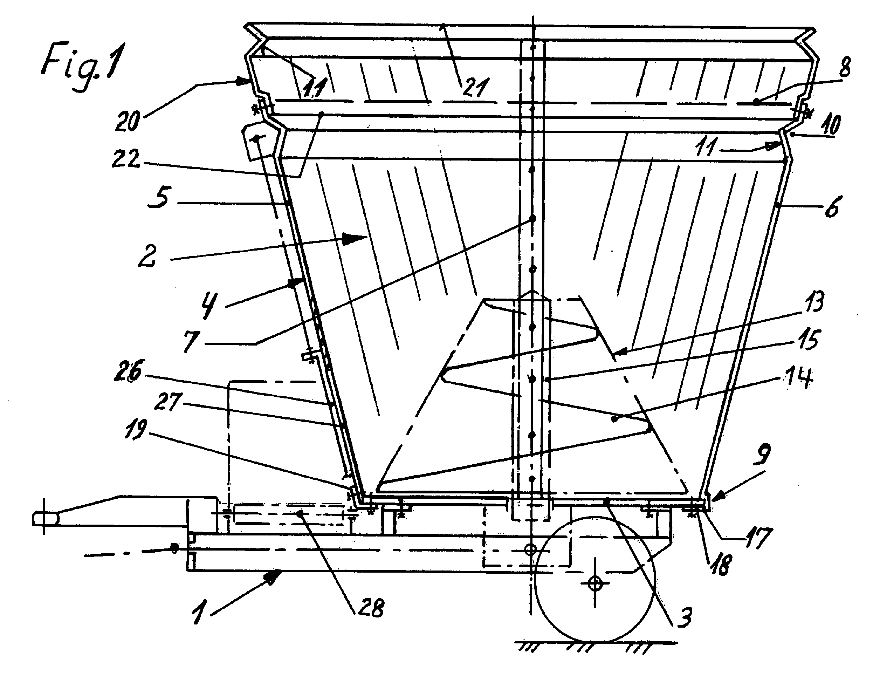

- Fig. 1: zeigt die Seitenansicht eines auf dem Fahrgestell eines Futtermischwagens angeordneten Mischbehälters mit einem optionalen Aufsatz zur Volumenserweiterung im Schnitt.

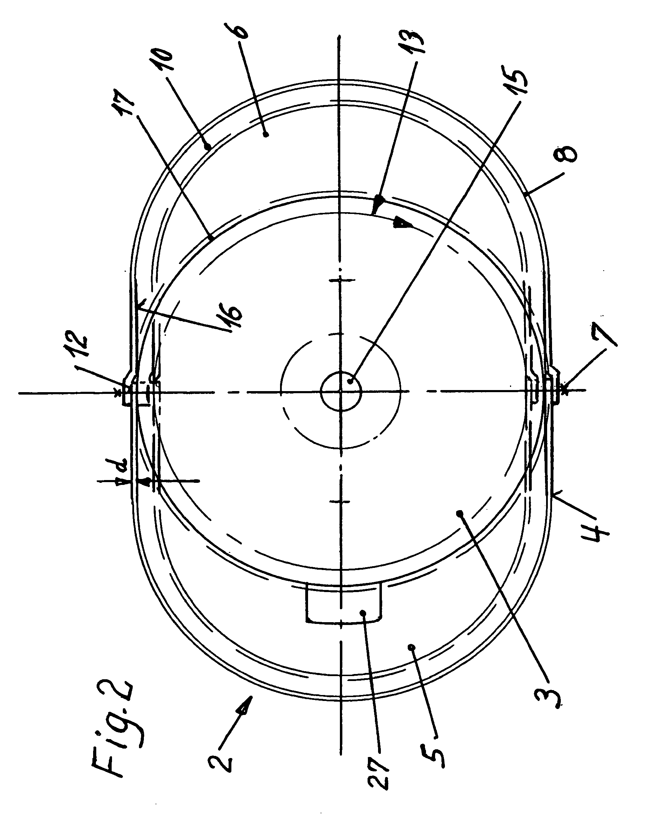

- Fig. 2: zeigt eine Draufsicht zu Fig. 1 (ohne Aufsatz).

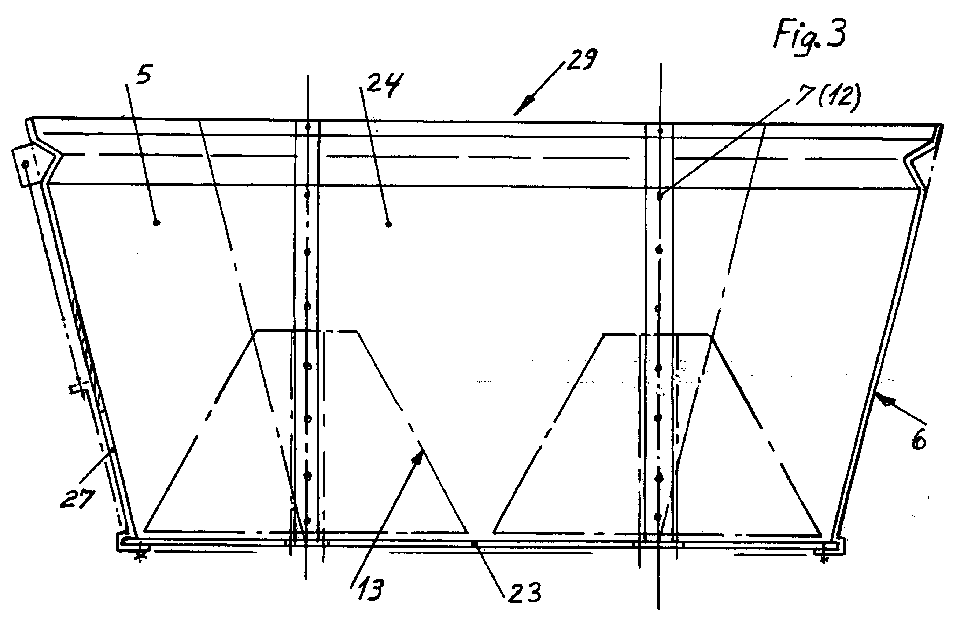

- Fig. 3: zeigt ein Ausführungsbeispiel des Mischbehälters mit zwei Mischschnecken in Schnittansicht.

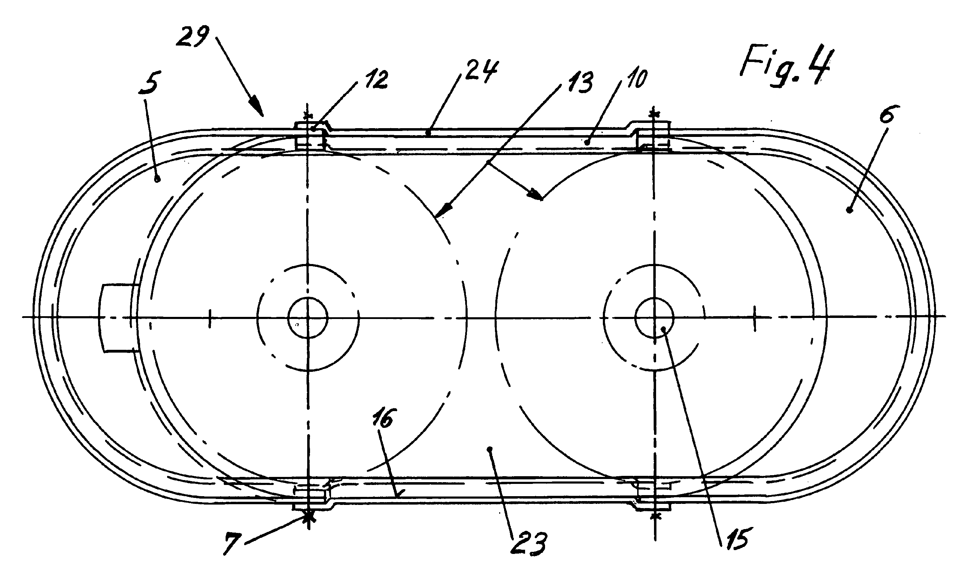

- Fig. 4: zeigt eine Draufsicht zu Fig. 3.

Der Mischbehälter 2 ist auf dem Fahrgestell 1 eines Futtermischwagens dargestellt. Er besteht im Wesentlichen aus dem Boden 3 und dem Mantel 4, der aus mindestens zwei Teilstücken besteht, aus einem Stirnteil 5 und einem Heckteil 6, welche an vorzugsweise vertikal angeordneten Schraubnähten 7 lösbar miteinander verbunden sind.

Mantel 4 und Boden 3 werden, wie am Heckteil 6 dargestellt, mittels der am unteren Rand 9 von Stirn- und Heckteil 5 und 6 angebrachten Bördelkante 17 zusammengefügt und über den äußeren Steg 18 der Bördelkanten 17 mit dem Boden 3 verschraubt oder verschweißt. Alternativ können, wie am Stirnteil 5 dargestellt, Boden 3 und Mantel 4 auch mittels eines den Boden 3 umlaufenden Winkelprofileisens 19 miteinander verschraubt werden.

In der Mitte des Mischbehälters 2 ist eine Mischschnecke 13 mit einer sich von unten nach oben kegelförmig verjüngenden Schneckenspirale 14 auf einer vertikalen Achse 15 angeordnet.

Stirn- und Heckteil 5 und 6 sind etwa spiegelbildlich zueinander ausgeführt, sie überlappen sich an ihren Schweiß- oder Schraubnähten 7, wo zur Erreichung eines stoßfreien Übergangs an der Innenseite 16 des Mischbehälters 2, eine der beiden sich überlappenden Anlageflächen 12, um die Materialdicke d der anschließenden anderen, abgesetzt wird.

In Nähe des oberen Randes 8 des Mantels 4 ist zur Randverstärkung eine umlaufende, in den Innenraum des Mischbehälters 2 hineinragende Sicke 10 angebracht, die an ihrer unteren Seite zu einer schrägen Abweisfläche 11 ausgebildet ist.

Oberhalb des Mischbehälters 2 kann wahlweise ein Aufsatz 20 angeordnet sein, der dem Mischbehälter 2 entsprechend gefertigt ist und mit den Außenflächen des unteren Randes 22 an den Innenflächen des oberen Randes 8 anliegt und verschraubt wird. Am oberen Rand 21 des Aufsatzes 20 ist ebenfalls eine umlaufende Sicke 10 angebracht.

Bei Mischbehältern 29, die mit zwei oder mehr Mischschnecken 13 ausgestattet sind, ist ein verlängerter Boden 23 erforderlich, Stirn- und Heckteil 5 und 6 werden übernommen.und zwischen diesen werden Mantelverlängerungen 24 mit Sicken 10 eingesetzt und an den Schraubnähten 7 miteinander verbunden. Die Befestigung der Mantelverlängerungen 24 am Boden 3 entspricht dem Mantel 4.

Der Boden 3 bzw. 23 kann mit den zur Verfügung stehenden Fahrgestellen 1 oder stationären Gestellen verschweißt oder verschraubt werden.

Zur Mischarbeit wird der Mischbehälter 2 bzw. 29 über seine oben offene Oberseite mit den zu vermischenden Materialien, bei möglichst rotierender Mischschnecke 13, befüllt. Beim Mischvorgang wird das Mischgut teilweise nach oben gewälzt. Die Abweisflächen 11 sind zur Verstärkung und zur Vermeidung von überlaufendem Mischgut vorgesehen.

Nach Beendigung des Mischvorganges wird durch eine, mittels eines Schiebers 26 zu öffnende Luke 27 im Mischbehälter 2, das Mischgut in bekannter Weise entladen und in der dargestellten Ausführung über ein Querförderband 28 in einem Futtergang abgelegt.

### Bezugszeichenliste:

- 1: Fahrgestell
- 2: Mischbehälter
- 3: Boden
- 4: Mantel
- 5: Stirnteil
- 6: Heckteil
- 7: Schraubnaht
- 8: Rand
- 9: Rand
- 10: Sicke
- 11: Abweisfläche
- 12: Anlagefläche
- 13: Mischschnecke
- 14: Schneckenspirale
- 15: Achse
- 16: Innenseite
- 17: Bördelkante
- 18: Steg
- 19: Winkelprofileisen
- 20: Aufsatz
- 21: Rand
- 22: Rand
- 23: Boden
- 24: Mantelverlängerung
- 25:
- 26: Schieber
- 27: Luke
- 28: Querförderband
- 29: Mischbehälter
- d: Materialdicke

## Patentansprüche

1. Mischbehälter (2; 29) für die Aufnahme von organischen Rohstoffen wie Gras- und/oder Maissilage, dessen Mantel (4) eine einteilige oder eine aus mehreren lösbaren Bauelementen gebildete Einheit darstellt, der sich an Stirn- und Rückseite nach oben annähernd ovalförmig erweitert und in dessen Innenraum mindestens eine, um eine vertikale Achse (15) rotierende Mischschnecke (13) angeordnet ist, der auf einem selbst fahrenden oder gezogenen Fahrgestell (1) zur Ausbringung der Mischprodukte in Futtergängen für Rindvieh eingesetzt wird oder in einer stationären Anlage organisch strukturierte Rohstoffe aufbereitet, die z.B. in Fermentern von Biogasanlagen verwertet werden, **dadurch gekennzeichnet, dass** der Mischbehälter (2; 29) einen oberen Rand (8) umfasst, an dem eine umlaufende Sicke (10) angebracht ist.

2. Mischbehälter (2; 29) nach Anspruch 1, **dadurch gekennzeichnet, dass** die Sicke (10) eine Vertiefung umfasst, welche auf der Innenseite des Mischbehälter (2; 29) angeordnet ist und eine Abweisfläche (11) aufweist.

3. Mischbehälter (2; 29) nach Anspruch 1 oder 2, **dadurch gekennzeichnet, dass** am oberen Rand (8) des Mischbehälter (2; 29) ein Aufsatz (20) montiert werden kann, der einen oberen Rand (21) umfasst, welcher mit einer nach innen gerichteten, mit einer Abweisfläche (11) versehenen, umlaufenden Sicke (10) ausgestattet ist.

4. Mischbehälter (29) nach einem der Ansprüche 1 bis 3, **dadurch gekennzeichnet, dass** bei Anordnung von mehreren Mischschnecken (13) Mantelverlängerungen (24) zwischen Stirn- und Heckteil (5 und 6) vorgesehen sind, welche mit Sicken (10) ausgestattet sind.

5. Mischbehälter (2; 29) nach einem der vorhergehenden Ansprüche, **dadurch gekennzeichnet, dass** Mantel (4) und Boden (3; 23) am unteren Rand (9) von Stirn- und Heckteil (5, 6) miteinander verschraubt sind.

6. Mischbehälter (2; 29) nach Anspruch 5, **dadurch gekennzeichnet, dass** die Schraubverbindung zwischen Mantel (4) und Boden (3; 23) an einer am unteren Rand (9) angebrachten Bördelkante (17) vorgesehen ist, wobei die Bördelkante (17) über einen äußeren Steg (18) mit dem Boden (3; 23) verbunden ist.

7. Mischbehälter (2; 29) nach Anspruch 5, **dadurch gekennzeichnet, dass** die Schraubverbindung zwischen Mantel (4) und Boden (3; 23) mittels eines den Boden (3; 23) umlaufenden Winkelprofileisens (19) realisiert ist.

## Claims

1. Mixing container (2; 29) for receiving organic raw materials such as grass and/or maize silage, the casing (4) of which constitutes a unit which is formed of one piece or of a plurality of releasable structural elements, which widens in the upwards direction in an approximately oval shape on the front and rear sides and in the inner space of which there is disposed at least one mixing screw (13) which rotates about a vertical axle (15), which is fitted on a self-propelled or pulled travelling mechanism (1) for discharging the mixed products into feeding aisles for cattle, or processes, in a stationary installation, organically structured raw materials which are utilised e.g. in fermenters ofbiogas plants, **characterised in that** the mixing container (2; 29) comprises an upper edge (8), on which a circumferential bead (10) is provided.

2. Mixing container (2; 29) as claimed in claim 1, **characterised in that** the bead (10) comprises a recess which is disposed on the inner side of the mixing container (2; 29) and has a deflector surface (11).

3. Mixing container (2; 29) as claimed in claim 1 or 2, **characterised in that** an attachment (20) can be mounted on the upper edge (8) of the mixing container (2; 29) and comprises an upper edge (21) which is equipped with an inwardly directed circumferential bead (10) which is provided with a deflector surface (11).

4. Mixing container (29) as claimed in any one of claims 1 to 3, **characterised in that** in the case of an arrangement of a plurality of mixing screws (13) casing extensions (24) are provided between the front and rear parts (5 and 6) which are equipped with beads (10).

5. Mixing container (2; 29) as claimed in any one of the preceding claims, **characterised in that** the casing (4) and the base (3; 23) are screwed together at the lower edge (9) of the front and rear parts (5, 6).

6. Mixing container (2; 29) as claimed in claim 5, **characterised in that** the screw connection between the casing (4) and the base (3; 23) is provided on a flanged edge (17) attached to the lower edge (9), wherein the flanged edge (17) is connected to the base (3; 23) via an outer web (18).

7. Mixing container (2; 29) as claimed in claim 5, **characterised in that** the screw connection between the casing (4) and the base (3; 23) is established by means of an angle section iron (19) which is circumferential to the base (3; 23).

## Revendications

1. Récipient mélangeur (2 ; 29) pour des matières organiques telles que les ensilages d'herbe et/ou de maïs,
- dont l'enveloppe (4) est constitué d'un ensemble monobloc ou de plusieurs éléments amovibles,
- qui s'évase vers le haut, à l'avant et à l'arrière, en prenant une forme approximativement ovale,
- qui est équipé, à l'intérieur, d'au moins une vis mélangeuse (13) tournant autour d'un axe vertical (15)
- et qui est utilisé, placé sur un châssis automobile ou tracté, pour distribuer les produits mélangés dans des couloirs d'alimentation de bovins, ou bien, dans un dispositif stationnaire, pour traiter des matières brutes à structure organique valorisées par exemple dans des fermenteurs d'installations de biogaz,
**caractérisé par le fait que** ledit récipient mélangeur (2 ; 29) comprend un bord supérieur (8) sur lequel est agencée une goulotte (10) de pourtour.

2. Récipient mélangeur (2 ; 29) selon la revendication 1, **caractérisé par le fait que** la goulotte (10) comprend un creux agencé sur le côté intérieur dudit récipient et doté d'une surface de rejet (11).

3. Récipient mélangeur (2 ; 29) selon la revendication 1 ou 2, **caractérisé par** la possibilité de monter une rehausse (20) sur le bord supérieur (8) du récipient, ladite rehausse comprenant un bord supérieur (21) équipé d'une goulotte (10) de pourtour orientée vers l'intérieur et dotée d'une surface de rejet (11).

4. Récipient mélangeur (29) selon l'une quelconque des revendications 1 à 3, **caractérisé par le fait que**, dans le cas où plusieurs vis mélangeuses (13) sont présentes, des extensions d'enveloppe (24) équipées de goulottes (10) sont prévues entre les parties avant (5) et arrière (6) du récipient.

5. Récipient mélangeur (2; 29) selon l'une quelconque des revendications précédentes, **caractérisé par le fait que** l'enveloppe (4) et le fond (3 ; 23) sont assemblés par vissage au niveau du bord inférieur (9) des parties avant (5) et arrière (6) du récipient.

6. Récipient mélangeur (2; 29) selon la revendication 5, **caractérisé par le fait que** la liaison par vissage entre l'enveloppe (4) et le fond (3 ; 23) est prévue sur une bordure rabattue (17) agencée sur le bord inférieur (9), ladite bordure rabattue (17) étant reliée au fond (3 ; 23) par le biais d'une entretoise extérieure (18).

7. Récipient mélangeur (2; 29) selon la revendication 5, **caractérisé par le fait que** la liaison par vissage entre l'enveloppe (4) et le fond (3 ; 23) est réalisée par le biais d'une cornière d'acier (19) de pourtour.
